# EUROPÄISCHE PATENTSCHRIFT

(11) **EP 2 187 757 B1**
(45) Veröffentlichungstag und Bekanntmachung des Hinweises auf die Patenterteilung: **04.12.2013**
(21) Anmeldenummer: 07785072.5
(22) Anmeldetag: 02.08.2007
(51) Int. Cl.: A23G 1/00, A23G 1/04

(54) **VERFAHREN UND VORRICHTUNG ZUR HERSTELLUNG DUNKLER SCHOKOLADE**
PROCESS AND DEVICE FOR PRODUCING DARK CHOCOLATE
PROCÉDÉ ET DISPOSITIF DE PRODUCTION DE CHOCOLAT NOIR

(43) Veröffentlichungstag der Anmeldung: 26.05.2010
(73) Patentinhaber: Chocoladefabriken Lindt & Sprüngli AG, 8802 Kilchberg (CH)
(72) Erfinder: BURI STAUFFACHER, Ursi, CH-8005 Zürich (CH); BUSSMANN, Chantal, CH-8134 Adliswil (CH); AMMANN, Willi, CH-6312 Steinhausen (CH)
(74) Vertreter: Rentsch Partner AG
(86) Internationale Anmeldenummer: PCT/CH2007/000377
(87) Internationale Veröffentlichungsnummer: WO 2009/015494

(56) Entgegenhaltungen:
- DE-A1- 4 139 817
- DE-A1- 10 253 810
- DE-B- 1 239 926
- DE-U1- 7 901 090
- GB-A- 191 116 431
- GB-A- 191 314 758
- US-A1- 2004 071 848
- US-A1- 2006 198 932
- BECKETT S.: "Industrial Chocolate Manufacture and Use" 1988, BLACKIE & SON LTD. , LONDON , XP002477442 Seite 96, Zeilen 13-25, Absatz 6.3.5.
- MARSHALKIN G A ET AL: "Manufacture of chocolate mass from centrifuged cocoa mass." KHLEBOPEKARNAYA I KONDITERSKAYA PROMYSHLENNOST' 1985 MOSKOVSKII TEKH. INST. PISHCHEVOI PROMYSHLENNOSTI, MOSCOW, USSR, 1985, XP008090690
- KOHLUS R ET AL: "Dampfdrucküberlagerte Zentrifugation. Eine mögliche Prozessintegration in der Lebensmitteltechnik." LEBENSMITTELTECHNIK, Bd. 29, Nr. 1/2, 1997, Seiten 36-38, XP008090688

## Beschreibung

### FELD DER ERFINDUNG

Die vorliegende Erfindung bezieht sich auf das Gebiet der Herstellung von dunkler Schokolade. Sie betrifft ein Verfahren zur Herstellung dunkler Schokolade gemäss dem Oberbegriff des Anspruchs 1, sowie eine Anlage zur Durchführung des Verfahrens gemäss dem Oberbegriff des Anspruchs 11.

### HINTERGRUND DER ERFINDUNG

Die Nachfrage nach dunkler Schokolade mit hohem Kakaogehalt hat in den letzten Jahren weltweit stark zugenommen. Wissenschaftliche Untersuchungen, in denen gezeigt wurde, dass der Verzehr dunkler Schokolade das Herz-Kreislauf-System schützt, dürften mit dazu beigetragen haben, dass vermehrt Bitterschokoladen und Edelbitterschokoladen, das heisst dunkle Schokoladen mit hohen Kakaoanteilen von über 70 bis zu 99 Gew.-% konsumiert werden.

Dunkle Schokolade erfreut sich jedoch nicht nur aufgrund ihres hohen Gehalts an Antioxidantien, wie zum Beispiel Flavonoiden wie Epicatechin, steigender Beliebtheit, sondern vor allem wegen ihrem intensiven Geschmack. Feinschmecker schätzen neben einem hohen Kakaogehalt auch sortenreine Schokoladen. Diese Schokoladen zeichnen sich dadurch aus, dass sie aus Kakaobohnen einzelner Edelkakao-Sorten, wie zum Beispiel den in Mittel- und Südamerika beheimateten Criollo- oder Arriba-Sorten hergestellt werden. Da, wie beim Weinbau, auch beim Kakaoanbau die Lage der Anbauflächen einen entscheidenden Einfluss auf die Qualität der Kakaobohnen hat, werden die sortenreinen Schokoladen vorzugsweise aus Bohnen bekannter Anbaugebiete und Provenienzen hergestellt. Ein Connaisseur, der die intensive Aromafülle eines edlen Arriba-Kakaos schätzt, wird einer Schokolade den Vorzug geben, die aus Bohnen aus dem tropischen Küstentiefland Ecuadors stammt. Ist eine Schokolade mit milderem Charakter gewünscht, so wird zum Beispiel Kakao aus Madagaskar, vorzugsweise aus der nordwestlichen Inselregion Sambirano gewählt, der einen ausgewogenen, fruchtig milden Charakter der Schokolade garantiert.

Für das Verständnis der vorliegenden Erfindung ist es entscheidend, die traditionellen Herstellungsverfahren für Schokolade zu kennen. Eine Einführung hierzu lässt sich zum Beispiel der Broschüre Chocologie der Chocosuisse, Münzgraben 6, CH-3000 Bern aus dem Jahre 2001 entnehmen. Darum soll im Folgenden nur kurz auf die wesentlichen Schritte bei der Schokoladeherstellung eingegangen werden.

Das Mischen verschiedener Kakaosorten und Provenienzen erfolgt nach firmenspezifischen und oft streng gehüteten Rezepten der einzelnen Hersteller. Die Mischungsverhältnisse haben entscheidenden Einfluss auf den Geschmack der jeweiligen Schokolade.

Die Bohnen werden geschält und in mittelgrosse Stücke, die so genannten Nibs, gebrochen. Die Schalen werden vom Kakaokernbruch durch Sieben und Absaugen getrennt. Beim anschliessenden Rösten wird primär eine Veredelung und Intensivierung des Aromas der gebrochenen Kakaobohnen angestrebt.

Beim anschliessenden Mahlen werden die groben Nibs in Mühlen zerkleinert und so zu feiner Kakaomasse vermahlen. Bekannte Mühlen sind Schlagmesser- und Kugelmühlen. Durch die beim Mahlen entstehende Wärme und durch den mechanischen Aufschluss der fetthaltigen Pflanzenzellen wird der in den Kakaobohnen enthaltene Fettanteil, die so genannte Kakaobutter, freigesetzt und die Kakaomasse verflüssigt sich. Je nach Kakaosorte beträgt der in den Bohnen enthaltene Anteil an Kakaobutter, deren Schmelzbereich bei ca. 30 bis 37 °C liegt, etwa 50 bis 55, in Ausnahmefällen von bis zu 56, Gewichtsprozent (Gew.-%). Die Provenienz spielt beim Fettgehalt eine wichtige Rolle, wobei üblicherweise für Bohnen der Haupternte mit Fettgehalten von 51 bis 53 Gew.-% gerechnet werden kann.

Die beim Mahlen entstandene Kakaomasse ist eine dunkle dickflüssige Masse, die beim Abkühlen auf Raumtemperatur erstarrt. Der holländische Chemiker Coenraad van Houten meldete bereits 1828 ein Patent für eine hydraulische Presse zur Entfettung von Kakaomasse an. Der Kakaobutteranteil der flüssigen Kakaomasse liess sich damit auf etwa 27 bis 28 % senken. Heute wird der Fettanteil der Kakaomasse, das heisst die Kakaobutter, üblicherweise in Hochleistungspressen bei Temperaturen von 80 °C bis 90 °C und einem Druck von 500 bar abgepresst. Der entfettete Presskuchen muss anschliessend in einem weiteren Verarbeitungsschritt zu Kakaopulver zermahlen werden. Der Presskuchen enthält standardmässig einen Fettanteil von 10 bis 12 % oder von 20 bis 22 %. Damit er sich noch zu Pulver verarbeiten lässt, darf er maximal 30 % Fettanteil enthalten. Die abgepresste flüssige Fraktion, das heisst die Kakaobutter, wird hauptsächlich zur Herstellung von Schokolade verwendet, kann aber auch in kosmetischen und pharmazeutischen Produkten Verwendung finden.

Zur Herstellung der Kakaobutter und des Kakaopulvers wird ein Teil der Kakaomasse hydraulischen Hochleistungspressen zugeführt, die bei Temperaturen von 80 °C bis 90 °C und einem Druck von 500 bar den Fettgehalt in der Kakaomasse auf 10 bis 22 Gewichtsprozent (Im Folgenden sollen alle Prozentangaben, sofern nicht ausdrücklich anderes erwähnt ist, als Gewichtsprozent verstanden werden.) reduzieren. Beim Abpressen der Kakaobutter aus der Kakaomasse entsteht, quasi als Nebenprodukt, der so genannte «Kakaokuchen», dessen Fettgehalt je nach Pressung zwischen 10 und 22 % schwankt. Alternativ zu den bekannten Pressverfahren wurde in der DE 102 53 810 vorgeschlagen, fein vermahlener Kakaomasse die Kakaobutter mittels Zentrifugieren zu entziehen und damit die Ausbeute an Kakaobutter zu verbessern, das heisst den Fettgehalt des Kakaopulvers zu verringern. Weitere Verfahren zur Herstellung von stark entfettetem Kakaopulver sind aus der US 2006/0198932 bekannt. Hier wird vorgeschlagen, Kakaomasse in einem kontinuierlichen Extraktionsverfahren unter Verwendung von Lösungsmitteln zu Kakaopulver mit einem Fettgehalt von bis unter 0.5 Gew.-% zu verarbeiten. Die organischen Lösungsmittel werden mit der Kakaomasse unter Wärmezufuhr in einem Tank vermischt, und anschliessend werden die feste und die flüssige Phase der dünnflüssigen Suspension in einer horizontalen Dekanterzentrifuge voneinander getrennt. Die derart gewonnene feste Phase oder Pulver-Phase wird in einem zweiten Schritt nochmals mit organischem Lösungsmittel erwärmt und ein zweites Mal der Zentrifuge zugeführt. Aus der festen Phase des zweiten Extraktionsschritts muss anschliessend noch das organische Lösungsmittel abgedampft werden. Die flüssigen Fraktionen aus Kakaobutter und Lösungsmittel müssen ebenfalls nachbehandelt werden, um das Lösungsmittel zu entfernen.

Der grosse Aufwand, der zur Gewinnung der Kakaobutter betrieben wird, erklärt sich einerseits durch den Wert des edlen Fetts mit seinem ausgeprägten Aroma, das gefiltert und gereinigt im Aussehen der Tafelbutter ähnelt, aber wesentlich härter ist. Bei der fertigen Schokolade hat sie grossen Anteil an der Struktur, dem Glanz und dem angenehmen Schmelz. Obwohl Kakaobutter in grossem Stil gehandelt wird, ist sortenreine Kakaobutter im Markt kaum erhältlich. Grundsätzlich besteht bei Verfahren zur Gewinnung von Kakaobutter immer Interesse an der maximalen Ausbeute der flüssigen Kakaobutter-Phase. Beim Prozess zur Entfettung der Kakaomasse liegt der Fokus entsprechend auf der maximalen Ausbeute der Trockenphase.

Je nach dem welche Schokoladensorte hergestellt werden soll, werden in den nachfolgenden Verfahrensschritten die Zutaten und deren quantitative Anteile nach bestimmten Basisrezepten ausgewählt und in bestimmter Abfolge zugegeben.

Auf nationaler oder regionaler Ebene ist durch entsprechende Gesetze und Verordnungen genau festgelegt, in welchen Grenzen sich die Mischungsverhältnisse bewegen dürfen und welche Zutaten eingesetzt werden dürfen.

Zur Herstellung dunkler Schokolade mit hohem Kakaogehalt werden in der Regel gemäss dem Basisrezept Kakaomasse, Kakaobutter, Kakaopulver, Zucker und Vanille oder Vanillin eingesetzt. Diese Zutaten werden in einem Mischer fein verteilt und geknetet, bis eine homogene, pastenförmige Masse entstanden ist, die jedoch als sandig wahrgenommen wird, da die Kakaopartikel und der Zucker noch mit einer Grösse im Bereich von 20 bis 500 zum vorliegen. Zudem enthält die Masse noch eine Reihe von unerwünschten Inhaltsstoffen, die den Geschmack negativ beeinflussen.

Um die Sensorik zu optimieren, wird die Masse im Walzwerk unter Einwirkung von Druck und Scherkräften bis auf eine Teilchengrösse von unter 20 µm zerkleinert.

Die unerwünschten und für das Aroma der Schokolade nachteiligen Geruchs- und Geschmacksstoffe, die zum Beispiel als volatile Säuren vorliegen und die in der gewalzten Masse immer noch enthalten sind, werden beim anschliessenden Conchieren entfernt. Die intensiven Scher- und Reibungskräfte (innere Reibung) und die intensive Durchlüftung, denen die gewalzte Masse beim Conchieren ausgesetzt ist, tragen entscheidend zur geschmacklichen und sensorischen Verbesserung der Schokolade bei. Früher wurde bis zu mehrere Tage conchiert. Dank moderner Conchierverfahren kann die Bearbeitungszeit in modernen Überschlagsconchen auf wenige Stunden reduziert werden. Dennoch ist sichergestellt, dass höchste Homogenität und Geschmeidigkeit erreicht wird, und sich die einzelnen Bestandteile der Schokolade geschmacklich miteinander verbinden. Ein feiner Film aus Kakaobutter legt sich um jedes der mikroskopisch kleinen Zucker- und Kakaoteilchen.

Nach Abschluss des Conchierens kann die flüssige Schokoladenmasse vorübergehend bei 45 bis 50°C gelagert werden. Unmittelbar vor dem Formungsprozess wird sie vorkristallisiert. Das Vorkristallisieren, auch Temperieren genannt, ist ein entscheidender Prozess, da er für den zarten Schmelz, den seidigen Glanz und den abgerundeten Geschmack der erstarrten Schokolade verantwortlich ist. Zudem spielt er eine wichtige Rolle für die Haltbarkeit der fertigen Schokolade. Die dunkle Schokoladenmasse wird beim Vorkristallisieren unter sanfter Bewegung auf 50°C erwärmt, dann auf etwa 27 bis 29°C abgekühlt und wieder auf etwa 29 bis 32°C erwärmt. Nun hat sie die richtige Fliesseigenschaft und Kristallisationsvorstufe erreicht, so dass nach dem Einfüllen in die Formen und dem Erstarren auch ein problemloses Herausnehmen aus den Formen garantiert ist.

Gemäss der bekannten Herstellungsverfahren für dunkle Schokoladen mit hohem Kakaogehalt, muss im Mischer Kakaopulver zugesetzt werden, da sich die Kakaomasse mit einem üblichen Fettgehalt von über 50 Gew.-% nicht mit Walzen weiterverarbeiten lassen. Soll ein hoher Kakaogehalt erreicht werden, lässt sich der Fettgehalt auch durch die Zugabe von Zucker nur in beschränktem Mass senken, so dass ein effizientes Walzen nur nach Zugabe von Kakaopulver möglich wird.

In der Veröffentlichung Industrial Chocolate Manufacture and Use von S. Beckett aus dem Jahr 1988 ist unter Punkt 6.3.5 "Standardization of cocoa mass" die Standardisierung des Fettgehalts von Kakaomasse beschrieben. Es wird dabei vorgeschlagen, dass eine Kakaomasse mittels Dekantieren auf einen Fettgehalt von 45 bis 50 Gewichtsprozent eingestellt wird.

### DARSTELLUNG DER ERFINDUNG

Es ist die Aufgabe der vorliegenden Erfindung, ein Verfahren und eine Anlage zur Herstellung von dunkler hochprozentiger Schokolade zur Verfügung zu stellen, welche die Nachteile der auf dem Markt befindlichen Verfahren und Anlagen nicht aufweisen. Es sollen insbesondere alternative Herstellungsverfahren vorgeschlagen werden, die eine effizientere Herstellung und eine einfachere Logistik bei der Herstellung dunkler Schokolade mit hohem Kakaoanteil und sortenreiner dunkler hochprozentiger Schokolade erlauben.

Diese Aufgabe wird durch die neuen erfindungsgemässen Verfahren und Anlagen gemäß Ansprüchen für die Herstellung von dunkler Schokolade gelöst.

Sie ermöglichen es dunkle Schokolade, insbesondere auch sortenreine dunkle Schokolade, mit hohem Kakaogehalt herzustellen, ohne dass Kakaopulver hergestellt und zugegeben werden muss.

Die erfindungsgemässen Verfahren und Vorrichtungen erlauben es, durch ein teilweises Entfetten der Kakaomasse in einem Verfahrensschritt, der dem Mischen, Walzen und Conchieren vorgeschaltet ist, den Fettgehalt in der Kakaomasse so weit zu senken, dass dunkle Schokoladen mit hohem Kakaomasseanteil von mindestens 57 %, aber auch solche mit einem Anteil von über 70 %, hergestellt werden können, ohne dass beim Mischen, vor dem Walzen oder beim Conchieren Kakaopulver zugegeben werden muss.

In weiteren bevorzugten Ausführungsformen der vorliegenden Erfindung werden Verfahren und Vorrichtungen zur Verfügung gestellt, bei denen die teilweise Entfettung der Kakaomasse in einem Dekanter durchgeführt wird.

Ein wesentliches Merkmal der Erfindung besteht in der teilweisen Entfettung der Kakaomasse, die vorzugsweise mittels eines Dekanters durchgeführt wird. Unter teilweiser Entfettung soll die Reduktion des Ausgangsfettgehaltes der Kakaomasse um 5 bis 15 Gew.-% auf einen Fettgehalt von 42 bis 49 Gew.-%, vorzugsweise auf 45 bis 49 % und besonders bevorzugt auf 47 Gew.-% verstanden werden. Die teilweise Entfettung erlaubt es, den Anteil der fettfreien Kakaotrockenmasse in der teilweise entfetteten Kakaomasse zu erhöhen.

Das neue Verfahren gemäss der vorliegenden Erfindung ermöglicht es in vorteilhafter Weise dunkle Schokolade, das heisst Schokolade mit einem hohen Kakaomassengehalt von 57 bis 80 Gew.-% vorzugsweise von 65 bis 75 Gew.-%, herzustellen, ohne dass Kakaopulver im Verlauf des Produktionsverfahrens hergestellt oder fremdes, von Dritten zugekauftes, Kakaopulver eingesetzt werden muss.

Das erfindungsgemässe Verfahren eignet sich in besonders vorteilhafter Weise zur Herstellung sortenreiner Schokolade mit einem hohen Kakaomassenanteil von mindestens 57, vorzugsweise 65 bis über 75 Gew.-%.

Ermöglicht werden die oben genannten Vorteile gemäss bevorzugter Ausführungsformen durch den Einsatz eines Dekanters oder einer Vollmantelschneckenzentrifuge zum teilweisen Entfetten der Kakaomasse. Falls nicht explizit anders erwähnt, soll im Folgenden der Begriff Dekanter auch Vollmantelschneckenzentrifugen umfassen. Für den Fachmann, der die Materialparameter, insbesondere die rheologischen Parameter der Kakaomasse kennt, spricht alles gegen den Einsatz eines Dekanters zum Bearbeiten von Kakaomasse. Dekanter, wie sie zum Beispiel aus dem deutschen Gebrauchsmuster DE 7901090 bekannt sind, werden zum Abtrennen von Feststoffen aus Flüssigkeiten oder dünnflüssigen Schlämmen eingesetzt und halten den hohen mechanischen Belastungen, wie sie beim Bearbeiten der zähen Kakaomasse auftreten, nicht stand. Zur Trennung eines Feststoff-Flüssigkeitsgemisches umfasst der Dekanter eine wenigstens teilweise konische, umlaufend antreibbare Trommel in der eine mit Differenzdrehzahl umlaufend antreibbare Schnecke angeordnet ist. Die Wendel der Schnecke sind derart an die Innenwand der Trommel angepasst ausgebildet, dass sich der unter Fliehkraft in dem zwischen der Schneckennabe und der Trommel gebildeten Trennraum absetzende Feststoff zu einem im konisch verengten Endbereich der Trommel ausgebildeten Feststoffaustrag fördern lässt. Durch die beim abnehmenden Fettgehalt zunehmende Zähheit der Masse wäre das Blockieren der Schnecke in herkömmlichen Dekantern vorprogrammiert.

Gemäss der vorliegenden Erfindung wird daher ein Dekanter mit einer gepanzerten Schnecke mit gehärtetem Material in der Flankenzone eingesetzt, um der mechanischen Belastung und der abrasiven Wirkung der Kakaomasse Stand zu halten. Um in der Trennzone möglichst wenig mechanische Widerstände zu bieten, die das Zufahren oder Blockieren des Dekanters begünstigen, ist die Schnecke poliert und sie ist frei von Flankenbeschichtungen.

Um die Verweilzeit der aufzutrennenden Masse in der Trennzone und das Strömungsverhalten der Masse beim Eintritt in die Trennzone vorteilhaft beeinflussen zu können, wird vorzugsweise eine geschlitzte Schnecke im Dekanter gemäss der vorliegenden Erfindung eingesetzt. Art, Anzahl und Form der Schlitze sind derart optimiert, dass die Masse am frühest möglichen Punkt/Ort in die Trennzone gelangen kann.

Ein wichtiges Auslegekriterium des Dekanters zur teilweisen Entfettung von Kakaomasse ist das Längen-Durchmesser-Verhältnis I:d (Schlankheitsgrad) der Trommel. In bevorzugten Ausführungsbeispielen liegt der Schlankheitsgrad, das heisst der Wert von I:d zwischen 2 und 4.5, vorzugsweise bei 3 bis 4.

Der Dekanter besitzt vorzugsweise einen zweimotorigen frequenzgesteuerten Antrieb für Trommel und Schnecke. Die maximale Drehzahl der Trommel beträgt etwa 4550 Umdrehungen in der Minute, die Differentialdrehzahl der Schnecke liegt zwischen 13 bis 25, vorzugsweise bei 18 bis 23 und besonders bevorzugt bei 20 bis 22. Es hat sich als vorteilhaft erwiesen, den Antrieb der Schnecke lastabhängig zu steuern. Sobald der Schneckenantrieb eine Last oberhalb eines vorgegebenen Wertes erfährt, wird die Differentialdrehzahl automatisch erhöht, um ein Blockieren zu verhindern.

Vorzugsweise trägt die Schnecke im konisch verengten Endbereich der Trommel beim Feststoffaustrag eine Stauscheibe, auch Tauchscheibe genannt, deren Durchmesser den Staudruck in der Trommel bestimmt. Der Innendurchmesser einer im Bereich des Austritts der flüssigen Phase angeordneten Regulierscheibe bestimmt den Ort der Phasentrennung im Dekanter.

Gemäss dem erfindungsgemässen Verfahren liegt die ideale Eingangstemperatur der Kakaomasse in den Dekanter bei 52 °C bis 58 °C, vorzugsweise bei 55 °C. Die Leistung der Zuführpumpe liegt zwischen 600 und 1000 kg/Std. Die Ausbeute an teilentfetteter Kakaomasse variiert zwischen 65 und 90 %, üblicherweise zwischen 75 und 85 %, und hängt vom angestrebten Fettgehalt der entfetteten Kakaomasse, von der Differenzdrehzahl und von der zugeführten Menge der zu entfettenden Kakaomasse ab.

Die als Zwischenprodukt neu anfallende teilweise entfettete Kakaomasse muss vor der Weiterverarbeitung keinen weiteren Prozessschritt durchlaufen, sondern kann direkt in der Form, wie sie beim Dekantieren entsteht, in einem eigentlichen Online-Prozess in den Mischer eingebracht werden. Im Vergleich dazu muss der bei herkömmlichen Verfahren anfallende Kakao-Presskuchen nach dem Pressen immer zu Kakaopulver vermahlen werden. Erst in dieser Form ist dann die Zugabe in den Mischer oder in seltenen Fällen in die Conche möglich. Zum einen erlauben es die neuen Verfahren mit relativ geringem apparativen und energetischen Aufwand, die zur Herstellung der dunklen Schokolade benötigten neuen Zwischenprodukte herzustellen, zum anderen wird die Logistik bei der Produktion sortenreiner dunkler Schokoladen enorm erleichtert. Dies ist besonders vorteilhaft, da die Verfügbarkeit von hochwertigem, sortenreinem Kakaopulver am Markt oft nicht gegeben ist. Die neuen Zwischenprodukte sind eine teilweise entfettete Kakaomasse mit einem Fettgehalt von 45 bis 49 Gew.-%, vorzugsweise 47 Gew.-%, und eine Kakaobutterfraktion mit einem Restgehalt an fettfreier Kakaotrockenmasse von 5 bis 30 Gew.-%, vorzugsweise 17 bis 21 Gew.-%. Da die teilweise entfettete Kakaomasse direkt im Mischer weiterverarbeitet werden kann und da kein zusätzliches Kakaopulver zugesetzt werden muss, entfällt jegliche Eingangskontrolle fremder oder Nachverfolgung intern hergestellter Kakaopulver. Die Sortenreinheit ist beim erfindungsgemässen Verfahren allein durch die entsprechende Mischung der Bohnen gewährleistet.

Wie bereits erwähnt, entsteht die erfindungsgemässe Kakaobutterfraktion beim Dekantieren als fettreiche Fraktion, die üblicherweise noch einen Anteil von 17 bis 21 Gew.-% an fettfreier Kakaotrockenmasse enthält. Gemäss der vorliegenden Erfindung werden die Kakaopartikel in der Kakaobutterfraktion in einem weiteren Bearbeitungsschritt fein zerkleinert, vorzugsweise werden sie mittels einer Kugelmühle in einem oder zwei Durchgängen auf die gewünschte Endfeinheit von bis zu unter 16 µm gemahlen. Vorzugsweise wird die derart zerkleinerte Kakaobutterfraktion in der Conche der Mischung aus teilweise entfetteter Kakaomasse und Zucker wieder beigefügt. Bei herkömmlichen Herstellungsverfahren wird die fettfreie Kakaotrockenmasse üblicherweise vollständig in Form von Kakaopulver im Mischer beigegeben. Die Kakaobutter wird nach anderen bekannten Rezepturen ganz oder zumindest teilweise in der Conche zugefügt. Wird ein Prozess mit vorzerkleinerter Kakaomasse gewählt, die in der Conche beigegeben wird, so erfolgt die Zugabe der vorzerkleinerten Kakaomasse meist am Beginn der Conchierphase. Dadurch entsteht eine Masse mit hohem Fettgehalt, die sehr weich ist und eine Trockenconchierung nicht mehr zulässt. Bei einer Zugabe von zerkleinerter Kakaomasse in die Conche muss diese bereits zu Beginn des Conchierens erfolgen, um sicher zu stellen, dass das Aroma der Schokolade nicht durch den hohen Anteil an Kakaotrockenmasse negativ beeinflusst wird. Gemäss der vorliegenden Erfindung kann die Kakaobutterfraktion hingegen zu einem späteren Zeitpunkt in der Conchierphase beigefügt werden, da die Aromakonzentration - bedingt durch den wesentlich tieferen Anteil an fettfreier Kakaotrockenmasse - tiefer ist und entsprechend nur ein geringerer Aromaübergang auf den Zucker sichergestellt werden muss. Die nach dem neuen Verfahren hergestellten Schokoladenmassen umfassen nach dem Conchieren zwischen 25 und 39 Gew.-%, vorzugsweise zwischen 28 und 36 Gew.-% fettfreier Kakaotrockenmasse.

Im Gegensatz zu Herstellungsverfahren die Kakaopulver einsetzen, liegen wesentliche Vorteile der Herstellung und Verwendung von teilweise entfetteter Kakaomasse in den tieferen Investitionskosten der Dekantertechnologie gegenüber Kakaopulverpressen und in den geringeren Betriebs- und Logistikkosten.

Gemäss der vorliegenden Erfindung lässt sich nicht nur Kakaomasse teilweise entfetten, sondern es lassen sich auch Nuss- oder Mandelpasten zur Herstellung eines Schokoladenproduktes mit einem erhöhten Nuss- oder Mandelanteil und/oder mit reduziertem Nuss- oder Mandelölanteil erzeugen.

### KURZBESCHREIBUNG DER FIGUREN

Bevorzugte Ausführungsformen der erfindungsgemässen Vorrichtungen und Verfahren werden nachstehend anhand der Zeichnungen beschrieben. Es zeigen :
- Fig. 1: ein Schema des Herstellungsverfahrens gemäss dem Stand der Technik; und
- Fig. 2: ein Schema des Herstellungsverfahrens gemäss einer Ausführungsform der vorliegenden Erfindung.

### DETAILLIERTE BESCHREIBUNG BEVORZUGTER AUSFÜHRUNGSFORMEN

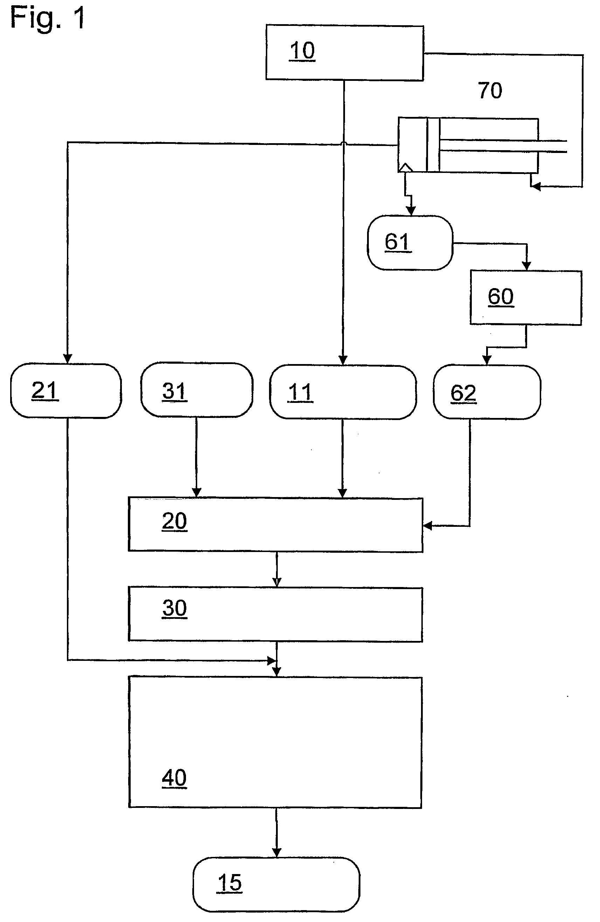

In der Figur 1 ist ein herkömmliches Verfahren zur Herstellung dunkler Schokolade mit einem Kakaogehalt von 70 Gew.-% dargestellt, bei dem vorgängig in einer Kugelmühle 10 gemahlene Kakaomasse 11 mit einem Fettgehalt von annähernd 52 Gew.-% teilweise einer Hochleistungspresse 70 zugeführt wird, in der - wie oben beschrieben - bei Temperaturen von 80 °C bis 90 °C und einem Druck von 500 bar die Kakaobutter 21 als flüssige Fraktion abgepresst wird. Der beim Abpressen der Kakaobutter aus der Kakaomasse entstehende Kakaokuchen 61 weist je nach Pressung einen Fettgehalt von 10 bis 22 % auf und muss in einem weiteren Verfahrensschritt 60 mechanisch zerkleinert werden, um Kakaopulver 62 zu erhalten.

Ein zweiter Teil der Kakaomasse wird mit Zucker 31 und Kakaopulver 62 in einem Mischer 20 zu einer Masse mit einem Fettgehalt von 27 bis 34 Gew.-% vermischt und anschliessend in einem zweistufigen Walzprozess 30 zerkleinert. Nach dem Walzen 30 wird die Masse in die Conche 40 überführt und es wird während der Aromaveredelung Kakaobutter 21 zugegeben. Nach Abschluss des Conchierens wird die restliche Kakaobutter zugegeben, um den angestrebten Kakaogehalt zu erreichen, danach steht die fertige dunkle Schokolademasse 15 mit einem Kakaogehalt von etwa 70 Gew.-% zur weiteren Verarbeitung oder zur Lagerung zur Verfügung.

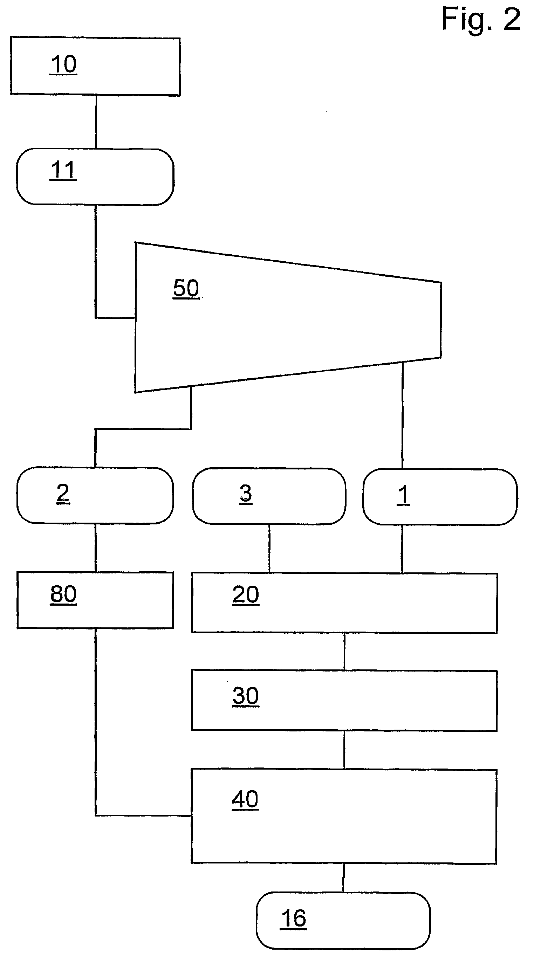

Die Vorteile des erfindungsgemässen Verfahrens sind aus der Figur 2 klar ersichtlich. Die Kakaomasse wird in einer Charge batchweise oder kontinuierlich in einem online Prozess einem Dekanter 50 zugeführt. Gemäss einer bevorzugten Ausführungsform handelt es sich bei der vorgängig hergestellten Kakaomasse um eine sortenreine Kakaomasse 11. Im Dekanter 50 wird in einem kontinuierlichen Prozess eine Kakaobutterfraktion 2 abgeschieden. Diese enthält neben Kakaobutter beispielsweise bis zu 30 Gew.-% fettfreie Kakaotrockenmasse, vorzugsweise 17 bis 21 Gew.-%. Als zweite Fraktion liefert der Dekanter 50 eine teilweise entfettete Kakaomasse 1 mit einem reduzierten Fettgehalt von zum Beispiel 42 Gew.-%. Diese teilweise entfettete Kakaomasse 1 wird in einem weiteren Verfahrensschritt zusammen mit dem rezeptorischen Anteil Zucker 3 und einem Anteil von Vanille oder Vanillin, das nicht in der Figur dargestellt ist, gemischt 20 und mit Vor- und Feinwalzen 30 zerkleinert, bevor es in einem weiteren Verfahrensschritt in der Conche 40 conchiert wird. Um eine Schokoladenmasse 16 mit einem Kakaogehalt von 70 Gew.-% herzustellen, wird dem zerkleinerten Gemisch aus teilweise entfetteter Kakaomasse 1 und Zucker 3 in der Conche 40 nach einigen Stunden die Kakaobutterfraktion 2 zugegeben, die in der Zwischenzeit vorzugsweise in einer Kugelmühle 80 zerkleinert worden ist. Durch die Behandlung in der Kugelmühle 80 sind die festen Kakaopartikel der Kakaobutterfraktion 2 zum Zeitpunkt der Zugabe in die Conche 40 bereits auf eine Grösse von unter 20 µm, vorzugsweise auf eine Grösse von 16 µm, zerkleinert.

Die Figur 2 zeigt, dass sich das Verfahren gemäss der vorliegenden Erfindung als kontinuierliches oder quasi-kontinuierliches Verfahren durchführen lässt, was sich für die Produktionslogistik als äusserst vorteilhaft erwiesen hat.

Sollen sortenreine dunkle Schokoladen hergestellt werden, so muss nicht noch zusätzlich die Herstellung, Lagerung und schlussendlich korrekte Zugabe von Kakaopulver der gleichen Sorte oder Provenienz überwacht werden, da gemäss der Erfindung die festen, fettfreien Kakaobestandteile nicht als Pulver abgeschieden werden. Sie verbleiben vielmehr in der Kakaobutterfraktion und der teilweise entfetteten Kakaomasse gemäss der vorliegenden Erfindung. Das neue Verfahren gemäss der vorliegenden Erfindung ermöglicht es den aus produktionstechnischer Sicht nun unnötigen Umweg über die aufwändige Fraktionierung eines Teils der Kakaomasse in ein stark entfettetes Kakaopulver und eine annähernd feststofffreie Kakaobutter zu vermeiden. Diese beiden Fraktionen werden nämlich im konventionellen Herstellungsprozess sowieso wieder zusammengeführt, so dass die zur Trennung eingesetzten Anlagen und die aufgewendete Zeit nicht sehr effektiv eingesetzt sind. Beim Verfahren gemäss der vorliegenden Erfindung wird dieser Aufwand hingegen vermieden, da die Kakaomasse nur teilweise entfettet wird, so dass sie sich problemlos mit den Feinwalzen zerkleinern lässt, der Weg bis zum stark entfetteten Kakaopulver aber vermieden werden kann.

### LISTE DER BEZUGSZAHLEN

- 1: teilentfettete Kakaomasse
- 2: Kakaobutterfraktion
- 3, 31: Zucker
- 10: Walzwerk
- 11: Kakaomasse
- 15: dunkle Schokolade mit Kakaopulver
- 16: dunkle Schokolade
- 20: Mischer
- 21: Kakaobutter
- 30: Feinmahlwerk
- 40: Conche
- 50: Dekanter
- 60: mechanische Zerkleinerung
- 61: Kakaokuchen
- 62: Kakaopulver
- 70: Hochleistungspresse
- 80: Kugelmühle

## Patentansprüche

1. Verfahren zum Herstellen von dunkler Schokolade (16), wobei es einen ersten Schritt umfasst, in dem Kakaomasse (11) auf einen Fettgehalt von 42 bis 49 Gew. %, vorzugsweise auf 45 bis 49 Gew. % und besonders bevorzugt auf 47 Gew. % unter Abscheiden einer Kakaobutterfraktion (2) teilweise entfettet wird, **dadurch gekennzeichnet, dass** die Kakaomasse (11) unter Abscheiden einer Kakaobutterfraktion (2) mit einen Anteil von 5 bis 30 %, vorzugsweise 17 bis 21 %, an fettfreier Kakaotrockenmasse entfettet wird.

2. Verfahren nach Anspruch 1, **dadurch gekennzeichnet, dass** in einer späteren Conchierphase die Kakaobutterfraktion beigefügt wird.

3. Verfahren nach Anspruch 2, **dadurch gekennzeichnet, dass** die Kakaobutterfraktion (2) zu einer gemahlenen Kakaobutterfraktion vermahlen wird.

4. Verfahren nach einem der Ansprüche 1 bis 3, **dadurch gekennzeichnet, dass** die teilweise entfettete Kakaomasse (1) vor einem Conchieren (40) mit Zucker (3) gemischt (20) und zerkleinert (30) wird.

5. Verfahren nach Anspruch 4, **dadurch gekennzeichnet, dass** die Schokoladenmasse (16) nach dem Conchieren zwischen 25 und 39 Gew. %, vorzugsweise zwischen 28 und 36 Gew. % fettfreier Kakaotrockenmasse umfasst.

6. Verfahren nach einem der vorhergehenden Ansprüche, **dadurch gekennzeichnet, dass** die Kakaomasse (11) in einem Dekanter (50) teilweise entfettet wird.

7. Verfahren nach Anspruch 6, **dadurch gekennzeichnet, dass** der Dekanter (50) zum teilweisen Entfetten der Kakaomasse (11) mit einer Differentialdrehzahl zwischen einer Trommel und einer innen liegenden Schnecke von 13 bis 25, vorzugsweise 18 bis 23 betrieben wird.

8. Verfahren nach einem der vorhergehenden Ansprüche, **dadurch gekennzeichnet, dass** die teilweise Entfettung der Kakaomasse (11) in einem Durchlaufverfahren erfolgt.

9. Verfahren nach einem der vorhergehenden Ansprüche, **dadurch gekennzeichnet, dass** die Ausbeute an teilweise entfetteter Kakaomasse zwischen 65 und 90 %, vorzugsweise zwischen 75 bis 85 % beträgt.

10. Verfahren nach einem der vorhergehenden Ansprüche, **dadurch gekennzeichnet, dass** die teilweise entfettete Kakaomasse (1) eine sortenreine Kakaomasse und die hergestellte Schokoladenmasse (16) eine Schokoladenmasse mit sortenreinem Kakao ist.

11. Verfahren nach einem der vorhergehenden Ansprüche, **dadurch gekennzeichnet, dass** die hergestellte Schokoladenmasse eine Schokoladenmasse mit hohem Kakaomassengehalt von 57 bis 80 Gew. %, vorzugsweise von 65 bis 75 Gew. % ist.

12. Anlage zur Durchführung des Verfahrens zum Herstellen dunkler Schokolade nach einem der Ansprüche 1 bis 11, wobei sie einen Dekanter (50) zum teilweisen Entfetten von Kakaomasse umfasst, **dadurch gekennzeichnet, dass** der Dekanter (50) eine gepanzerte Schnecke mit gehärteten Flankenzonen umfasst und die Schnecke poliert und frei von Flankenbeschichtungen ist, so dass beim Dekantieren eine Kakaobutterfraktion entsteht, die einen Anteil von 5-30 Gew.%, vorzugsweise von 17 bis 21 Gew.%, an fettfreier Kakaomasse enthält.

13. Anlage zum Herstellen dunkler Schokolade nach Anspruch 12, **dadurch gekennzeichnet, dass** der Schlankheitsgrad des Dekanters (50) einen Wert von I:d zwischen 2 und 4.5, vorzugsweise 3 bis 4 aufweist.

14. Anlage zum Herstellen dunkler Schokolade nach einem der Ansprüche 12 oder 13, **dadurch gekennzeichnet, dass** die Schnecke im konisch verengten Endbereich des Dekanters (50) eine Stauscheibe trägt, deren Durchmesser den Staudruck in der Trommel bestimmt.

## Claims

1. Process for producing dark chocolate (16), comprising a first step in which cocoa mass (11) is partially defatted to a fat content of 42 to 49% by weight, preferably to 45 to 49% by weight, and particularly preferably to 47% by weight, with separation of a cocoa butter fraction (2), **characterized in that** the cocoa mass (11) is defatted under separation of a cocoa butter fraction (2) with a content of 5 to 30%, preferably 17 to 21 %, of fat-free cocoa dry matter.

2. Process according to Claim 1, **characterized in that** at a later state during the conching phase the cocoa butter fraction is added.

3. Process according to Claim 2, **characterized in that** the cocoa butter fraction (2) is ground to give a ground cocoa butter fraction.

4. Process according to any one of Claims 1 to 3, **characterized in that** the partially defatted cocoa mass (1), before conching (40) is mixed (20) with sugar (3) and comminuted (30).

5. Process according to Claim 4, **characterized in that** the chocolate mass (16) after conching comprises between 25 and 39% by weight, preferably between 28 and 36% by weight, of fat-free cocoa dry matter.

6. Process according to any one of the preceding claims, **characterized in that** the cocoa mass (11) is partially defatted in a decanter (50).

7. Process according to Claim 6, **characterized in that** the decanter (50), for partial defatting of the cocoa mass (11), is operated at a differential speed of rotation between a drum and an internal screw of 13 to 25, preferably 18 to 23.

8. Process according to any one of the preceding claims, **characterized in that** the cocoa mass (11) is partially defatted in a continuous flow process.

9. Process according to any one of the preceding claims, **characterized in that** the yield of partially defatted cocoa mass is between 65 and 90%, preferably between 75 and 85%.

10. Process according to any one of the preceding claims, **characterized in that** the partially defatted cocoa mass (1) is a single-variety cocoa mass, and the chocolate mass (16) which is produced is a chocolate mass having a single variety of cocoa.

11. Process according to any one of the preceding claims, **characterized in that** the chocolate mass produced is a chocolate mass having a high cocoa mass content of 57 to 80% by weight, preferably 65 to 75% by weight.

12. An installation for carrying out the process of for producing dark chocolate according to one of Claims 1 to 11, comprising a decanter (50) for partial defatting of a cocoa mass, **characterized in that** the decanter (50) comprises an armoured screw having hardened flank zones and the screw is polished and free from flank coatings, such that during decanting a cocoa butter fraction with a content of 5 to 30%, preferably 17 to 21 %, of fat-free cocoa dry matter is obtain.

13. The installation for producing dark chocolate according to Claim 12, **characterized in that** the slenderness ratio of the decanter (50) has a I:d value between 2 and 4.5, preferably 3 to 4.

14. The installation for producing dark chocolate according to any one of Claims 12 or 13, **characterized in that** the screw, in the conically tapered end region of the decanter (50), bears a baffle disc, the diameter of which determines the back pressure in the drum.

## Revendications

1. Procédé de fabrication de chocolat noir (16), le procédé présentant une première étape dans laquelle une pâte de cacao (11) est partiellement dégraissée jusqu'à une teneur en matière grasse de 42 à 49 % en poids, de préférence de 45 à 49 % en poids et de façon particulièrement préférable de 47 % en poids avec séparation d'une fraction (2) de beurre de cacao,
**caractérisé en ce que**
la pâte de cacao (11) est dégraissée avec séparation d'une fraction (2) de beurre de cacao dont la teneur représente de 5 à 30 % et de préférence de 17 à 21 % de la pâte sèche de cacao dégraissée.

2. Procédé selon la revendication 1, **caractérisé en ce que** la fraction de beurre de cacao est ajoutée dans une phase ultérieure de conchage.

3. Procédé selon la revendication 2, **caractérisé en ce que** la fraction (2) de beurre de cacao est broyée pour fournir une fraction broyée de beurre de cacao.

4. Procédé selon l'une des revendications 1 à 3, **caractérisé en ce que** la pâte de cacao (1) partiellement dégraissée est mélangée (20) avec du sucre (3) et fractionnée (30) avant le conchage (40).

5. Procédé selon la revendication 4, **caractérisé en ce qu'**après le conchage, la pâte de chocolat (16) comporte entre 25 et 39 % en poids et de préférence entre 28 et 36 % en poids de pâte sèche de cacao dégraissée.

6. Procédé selon l'une des revendications précédentes, **caractérisé en ce que** la pâte de cacao (11) est partiellement dégraissée dans un décanteur (50).

7. Procédé selon la revendication 6, **caractérisé en ce que** le décanteur (50) est utilisé pour le dégraissage partiel de la pâte de cacao (11) à une différence de vitesse entre un tambour et une vis intérieure de 13 à 25 et de préférence de 18 à 23.

8. Procédé selon l'une des revendications précédentes, **caractérisé en ce que** le dégraissage partiel de la pâte de cacao (11) s'effectue en continu.

9. Procédé selon l'une des revendications précédentes, **caractérisé en ce que** le rendement en pâte de cacao partiellement dégraissée est compris entre 65 et 90 % et de préférence entre 75 et 85 %.

10. Procédé selon l'une des revendications précédentes, **caractérisé en ce que** la pâte de cacao (1) partiellement dégraissée est une pâte de cacao pur, la pâte de chocolat (16) produite étant une pâte de chocolat à cacao pur.

11. Procédé selon l'une des revendications précédentes, **caractérisé en ce que** la pâte de chocolat produite est une pâte de chocolat à haute teneur en pâte de cacao, de 57 à 80 % en poids et de préférence de 65 à 75 % en poids.

12. Installation en vue de la mise en oeuvre du procédé de fabrication de chocolat noir selon l'une des revendications 1 à 11, l'installation présentant un décanteur (50) assurant le dégraissage partiel de la pâte de cacao,
**caractérisée en ce que**
le décanteur (50) comporte une vis blindée dont les flancs sont durcis, la vis étant polie et ses flancs ne présentant pas de revêtement de manière à obtenir lors de la décantation une fraction de beurre de cacao qui contient une teneur de 5 à 30 % en poids et de préférence de 17 à 21 % en poids de pâte de cacao dégraissée.

13. Installation de production de chocolat noir selon la revendication 12, **caractérisée en ce que** la valeur l:d du degré de finesse du décanteur (50) est comprise entre 2 et 4,5 et de préférence entre 3 et 4.

14. Installation de production de chocolat noir selon l'une des revendications 12 ou 13, **caractérisée en ce que** dans la partie finale rétrécie coniquement du décanteur (50), la vis présente un disque d'accumulation dont le diamètre définit la pression d'accumulation dans le tambour.
